# EUROPEAN PATENT APPLICATION

(11) **EP 2 112 610 A1**
(43) Date of publication of application: **28.10.2009**
(21) Application number: 07800903.2
(22) Date of filing: 26.09.2007
(51) Int. Cl.: G06F 21/00

(54) **A METHOD AND SYSTEM FOR PROVIDING, USING RIGHTS DESCRIBE**

(30) Priority: 15.02.2007 CN 200710079851
(71) Applicant: Huawei Technologies Co., Ltd., Longgang District, Shenzhen Guangdong 518129 (CN)
(72) Inventor: LI, Qingliang, Shenzhen, Guangdong 518129 (CN); JIA, Haibo, Shenzhen, Guangdong 518129 (CN); LIU, Weilong, Shenzhen, Guangdong 518129 (CN)
(74) Representative: Thun, Clemens
(86) International application number: PCT/CN2007/002822
(87) International publication number: WO 2008/098440

(57) **Abstract**

A method for providing rights description includes: generating a rights expression for controlling the use of digital contents, where the rights expression uses a parameter constant to describe permission and constraint of the rights and uses a parameter variable to describe consumption state information of the rights; and providing the terminal device with the rights expression. A method for using rights description includes: obtaining the rights expression for controlling the use of digital contents; transferring the value of the rights consumption state to the corresponding parameter variable in the rights expression, executing the rights expression to obtain the remaining consumption state information of the rights, and using the digital contents according to the remaining consumption state information. The invention also discloses a server, a terminal device and a DRM system. The technical solution under the present invention extends the rights description language without upgrading the terminal device, and sets the logic relations between different rights items flexibly.

## Description

This application claims a priority from the Chinese Patent Application No. 200710079851. X , filed with the Chinese Patent Office on Feb. 15, 2007 and entitled " A Method and System for Providing and Using Rights Description ", the contents of which are incorporated herein by reference in their entirety.

### Field of the Invention

The present invention relates to the Digital Rights Management (DRM) technology, and in particular, to a method and a system for providing and using rights description.

### Background of the Invention

DRM controls the use of digital contents through a rights constraint and content protection solution to protect the legal rights of the content owner. After a Content Issuer (CI) encrypts the digital contents, a user downloads the encrypted digital content packets to a terminal device; an Rights Issuer (RI) is responsible for distributing the rights associating the digital contents. The rights include a content key and the corresponding rights, the content key is adapted to decrypt digital contents. A terminal device may use the purchased digital contents normally if it owns both the content packet (which includes the information required for decrypting the digital content) and an Rights Object (RO). The DRM agent in a terminal device decrypts out the RO by using the public key of the terminal device, thus obtaining the content key in the RO for the purpose of decrypting the digital content, and then controls the use of the digital content according to the rights information.

In the present, the rights description language is based on the XML format or other text formats. Moreover, the description on the XML format or other text formats may be encoded (for example, WBXML encoding) to compress the file into a smaller size. The rights description language provided in present is the mobile application part of the Open Rights Digital Language (ORDLv1.1), namely, a subset of the ORDL. Available functions include: providing metadata such as version and content ID; providing connections for the digital contents and protecting the relevant information; providing the specifications on the use of rights and constraints; model, namely, grouping the rights elements according to the function, where the definition of the rights elements and the semantics should be concise.

The models for rights description languages available in the present include foundation model, agreement model, context model, permission model, constraint model, and security model.

In the process of researching the present invention, the inventor finds the following defects in the present:

In the rights description language used for interactions between a server and a terminal device, the definitions of the elements of each model are definite and fixed, and the server and the terminal device need to negotiate the format of the rights description file, supported types of rights and meanings of the rights items before interaction, so that the rights can be provided and used successfully, but this is not conducive to extension of the rights description language. Once a new control item needs to be added, it is necessary to upgrade the server and the terminal device. If a terminal device does not support upgrade, the terminal device must be replaced, which leads to high costs. Moreover, the server and the terminal device have to negotiate the logic relation between different rights items. The logic relation is unchangeable once it is determined. If the logic relation is changed, the server and the terminal device are also baffled by the issue of upgrade.

### Summary of the Invention

The present invention provides a method and a system for providing and using rights description so that the rights description language can be extended without upgrading the terminal device, and the logic relation between different rights items can be set flexibly.

The method for providing rights description in an embodiment of the present invention includes :generating a rights expression for controlling the use of digital contents, a parameter constant is used to describe the permission and constraint of the rights and a parameter variable is used to describe the consumption state information of the rights in the rights expression; and
providing a terminal device with the rights expression.

The method for using rights description in an embodiment of the present invention includes :obtaining a rights expression for controlling use of digital contents, in which a parameter constant is used to describe the permission and constraint of the rights and a parameter variable is used to describe the consumption state information of the rights in the rights expression;
transfers the value of the rights consumption state recorded by the terminal device to the corresponding parameter variable in the rights expression and executing the rights expression to obtain the remaining consumption state information of the rights; and
uses the digital contents according to the remaining consumption state information of the rights.

A server provided in an embodiment of the invention includes: a receiving unit, adapted to receive the permission and constraint for controlling the use of digital contents and consumption state information;a generating unit adapted to generate a rights expression for controlling the use of digital contents, a parameter constant is used to describe the permission and constraint of the rights and a parameter variable is used to describe the consumption state information of the rights in the rights expression; and a sending unit, adapted to provide the terminal device with the rights expression.

A terminal device provided in an embodiment of the present invention includes:an obtaining unit, adapted to obtain a rights expression for controlling use of digital contents, a parameter constant is used to describe the permission and constraint of the rights and a parameter variable is used to describe the consumption state information of the rights in the rights expression; an executing unit, adapted to transfer the value of the recorded rights consumption state to the corresponding parameter variable in the rights expression and execute the rights expression to obtain the remaining consumption state information of the rights; and an applying unit, adapted to use the digital contents according to the remaining consumption state information of the rights.

A DRM system provided in an embodiment of the present invention includes:a server is adapted to generate a rights expression for controlling the use of digital contents, a parameter constant is used to describe the permission and constraint of the rights and a parameter variable is used to describe the consumption state information of the rights, and provide the terminal device with the rights expression in the rights expression; and a terminal device, adapted to obtain the rights expression from the server, transfer the recorded value of the rights consumption state to the corresponding parameter variable in the rights expression, execute the rights expression to obtain the remaining consumption state information of the rights, and use the digital contents according to the remaining consumption state information of the rights.

In the embodiments of the present invention, the server provides the terminal device with the generated rights expression which controls the use of digital contents, where a parameter constant is used to describe the permission and constraint of the rights and a parameter variable is used to describe the consumption state information of the rights in the rights expression uses. After receiving the rights expression, the terminal device needs to transfer the value of the consumption state to the corresponding parameter variable in the rights expression, execute the rights expression according to the syntax definition of the rights expression to obtain the remaining consumption state information of the rights, and use the digital contents according to the remaining consumption state information of the rights. In this process, it is not necessary for the terminal device and the server to negotiate the format of the rights description file and supported rights types or meanings of the rights items beforehand, thus making the rights description language flexibly extensible. The rights expression uses a parameter constant to describe the permission and constraint of the rights and uses a parameter variable to describe the consumption state information of the rights, thus making it convenient to set the logic relations between different rights items flexibly.

### Brief Description of the Drawings

Figure 1 shows a schematic structure of a DRM system in an embodiment of the present invention;
Figure 2 is a flow chart of executing an If statement in an embodiment of the present invention;
Figure 3 is a flow chart of executing a For statement in an embodiment of the present invention;
Figure 4 shows a schematic structure of a server in an embodiment of the present invention;
Figure 5 is a flow chart of a server generating and sending a rights expression in an embodiment of the present invention;
Figure 6 is a flow chart of a terminal device obtaining a rights object in an embodiment of the present invention;
Figure 7 shows a schematic structure of a terminal device in an embodiment of the invention;
Figure 8 is a flow chart of a terminal device executing a rights expression and using the digital contents according to the execution result in an embodiment of the present invention; and
Figure 9 is a flow chart of a terminal device executing a rights expression and obtaining the remaining consumption state information of one of the rights in an embodiment of the present invention.

### Detailed Description of the Invention

In an embodiment of the present invention, a server generates a rights expression for controlling the use of digital contents and provides the terminal device with the rights expression. a parameter constant is used to describe the permission and constraint of the rights and a parameter variable is used to describe the consumption state information of the rights in the rights expression. The terminal device transfers the value of the consumption state to the corresponding parameter variable in the rights expression, executes the rights expression to obtain the remaining consumption state information of the rights, and uses the digital contents according to the remaining consumption state information. It is not necessary for the terminal device and the server to negotiate the rights beforehand, and the rights expression uses a parameter constant to describe the permission and constraint of the rights and uses a parameter variable to describe the consumption state information of the rights. Therefore, the rights description language can be extended without upgrading the terminal device, and the logic relation between different rights items can be set flexibly.

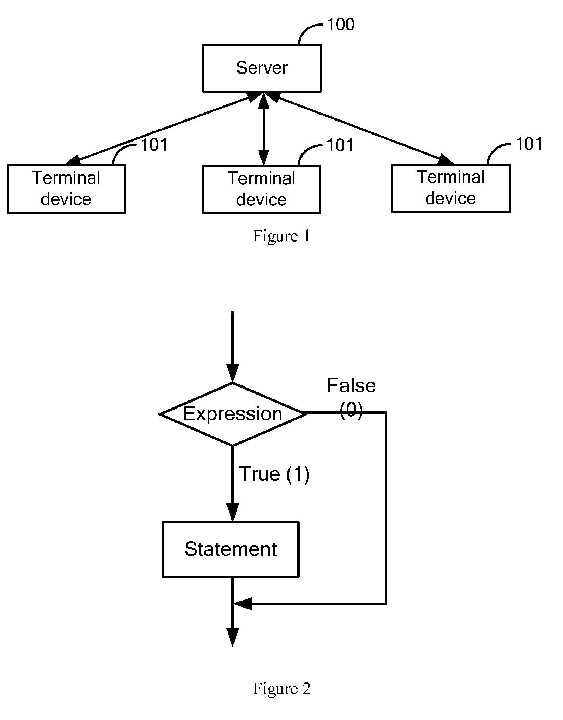

As shown in Figure 1, a DRM system in an embodiment of the present invention includes: a server 100 and a terminal device 101. The server 100 may be an RI, which is responsible for distributing rights corresponding to the digital contents. The rights include a content key (for decrypting the digital contents) and the corresponding rights, and are given in the form of a rights expression. The server 100 obtains the rights information for controlling the use of digital contents, including the permission and constraint of rights and the consumption state information of the rights, generates a rights expression for controlling the use of digital contents, where the rights expression uses a parameter constant to describe the permission and constraint of the rights and uses a parameter variable to describe the consumption state information of the rights, and provides the rights expression for the terminal device 101. The terminal device 101 is adapted to transfer the recorded value of the consumption state to the rights expression, obtain the remaining consumption state information of the rights, and use the digital contents according to the remaining consumption state information.

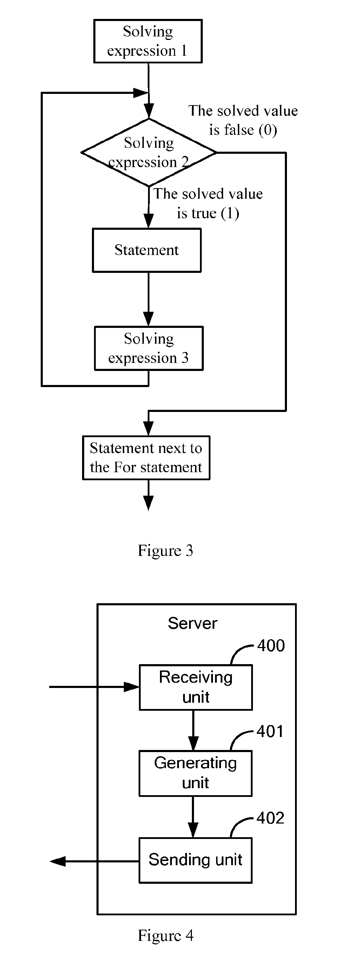

When the server 100 generates a rights expression, the server formulates a rights control policy first as required for protecting the contents, and defines the rights information of the digital contents. The rights information includes permission of the rights, for example, security control (the user may perform any operation within the constraint scope), play (the user may play a content within the constraint scope), display (the user may display a content within the constraint scope), execute (the user may execute a content within the constraint scope), print (the user may print a content within the constraint scope), modify (the user may modify, copy, paste, and save a content, or save the content as another format within the constraint scope, provided that the saved content is still protected by the corresponding rights expression), forward (the user may forward a content within the constraint scope), export (the user may export a content to other devices within the constraint scope), or any combination thereof; and may also include constraints of rights, for example, count, validity period (datetime), relative validity period (interval), accumulated duration (accumulated), duration-based count (timed-count), period, or any combination thereof; and may also include consumption state information of rights, for example, consumed count and consumed duration.
The template for the server 100 to generate a rights expression according to the rights control policy may be automatic generated through program control, or compiled manually and loaded into the server. The syntax of the rights expression is defined below:
1. Operator. Operators include: arithmetic operators, which are adapted for operation of various real number values and may be any of these symbols: add (+), subtract (-), multiply (*), divide (/); relation operators, which are adapted for comparison operation and may be any of these symbols: greater than (>), less than (<), equal to (==), greater than or equal to (>=), less than or equal to (<=), and unequal (!=); logic operators, which are adapted for operation of logic values and may be any of these symbols: AND (&&), OR (∥), EXCLUSIVE (!), assignment operators, which are adapted for assignment operation and may be identified by the symbol (=).
2. Expression. An expression is an equation made up of constants, variables and functions linked through operators. Each expression has a value and a type. The evaluation of an expression is performed in the order stipulated by priority and associativity.
3. Relation expression. The structure of a relation expression is: expression, relation operator, expression.
4. Branch statement. For example, the semantics of an If (expression) statement is: if the value of the expression is true, execute the subsequent statement; otherwise, do not execute the subsequent statement. The execution process is shown in Figure 2.
5. Loop statement. For example, the execution process of a For (expression 1; expression 2; expression 3) statement is shown in Figure 3: solving expression 1; solving expression 2; if the solved value is true (non zero), executing the specified embedded statement in the For statement; otherwise, executing the next statement of the For statement; solving expression 3, and returning to the solving expression 2.
6. Variable type: integer variable, real number variable, and symbol variable.
7. Constant type: integer constant, real number constant, and string constant.
8. Structure type. General form of defining a structure:
   struct structure name
   {member list};
      A member list consists of several members, and each member is a part of the structure. For each member, the type of the member needs to be described in the following form:
      type descriptor: member name;

The member name needs to comply with the rules of writing an identifier.

The server 100 generates a template of a rights expression according to the syntax of the rights expression and the rights control policy, uses a parameter constant to describe the system configuration or the permission and constraint of the rights in the rights expression and uses a parameter variable to describe the consumption state information of the rights. More particularly, the permission and constraint of the rights may be replaced by using the corresponding parameter variable in the rights expression template, namely, a parameter constant is used to define the permission and constraint of the rights in the rights expression, and the consumption state information of the rights described through a parameter variable is reserved, thus generating a final rights expression. Moreover, description information of the rights may be added into the rights expression. The description information associates the rights uniquely, and is a text description about the rights expression. After the description information of the rights expression is provided for the user, the user may judge whether the permission and constraint of rights in the rights expression are consistent with the permission and constraint in the system configuration or subscribed rights.

The server 100 may provide the generated rights expression to the terminal device 101 directly; preferably, the server 100 may embed the generated rights expression into a Rights Object (RO), and then provide it for the terminal device 101. The RO includes not only the rights expression (namely, the rights description part), but also a content key which is adapted to decrypt the digital contents, an RO ID, a content summary, and RI information etc..

As shown in Figure 4, the structure of a server in an embodiment of the present invention includes: a receiving unit 400, a generating unit 401, and a sending unit 402. The receiving unit 400 is adapted to receive the rights permission and constraint for controlling the use of digital contents, and consumption state information; the generating unit 401 is adapted to generate a rights expression for controlling the use of the digital contents, where the rights expression uses a parameter constant to describe the permission and constraint of the rights and uses a parameter variable to describe the consumption state information of the rights; and the sending unit 402 is adapted to provide the terminal device with the rights expression.

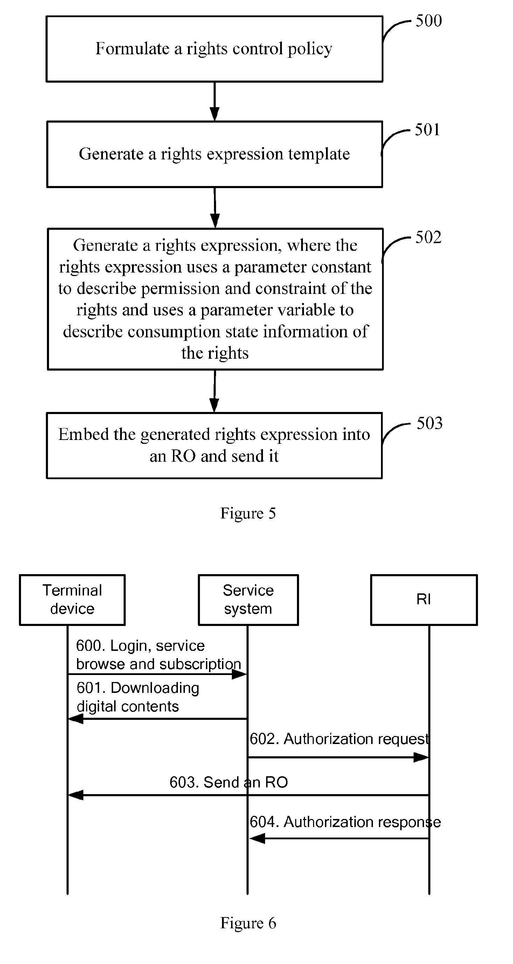

As shown in Figure 5, the process of generating and sending a rights expression by a server in an embodiment of the present invention includes:
Step 500: The server formulates a rights control policy as required for protecting contents, and defines the rights information of the digital contents, where the rights information includes permission and constraint of the rights, and the consumption state information of the rights.
Step 501: The server generates a rights expression template according to the syntax of the rights expression and the rights control policy.
Step 502: The server generates a rights expression for controlling the use of digital contents, a parameter constant is used to describe the permission and constraint of the rights and a parameter variable is used to describe the consumption state information of the rights in the rights expression.
Step 503: The server embeds the generated rights expression into the RO and sends it to the terminal device.

In step 503, the server sends the RO with the embedded rights expression to the terminal device. In this step, the server may also send the rights expression to the terminal device separately. The RO may be sent through interaction between the terminal device and the server in the prior art, for example, through Wireless Application Protocol Push (WAP Push). As shown in Figure 6, the process of obtaining the RO by the terminal device includes the following steps:
Step 600: The terminal device logs in to the service system (also known as a content system, which provides digital contents) to browse and subscribe to contents.
Step 601: The terminal device downloads digital contents from the service system to a local directory.
Step 602: The service system notifies the server (here the server is an RI) to authorize the digital contents and requests the RI to send the RO associating the digital contents downloaded by the terminal device.
Step 603: According to the request of the service system, the RI sends the corresponding RO carrying a rights expression for controlling the use of digital contents to the terminal through WAP Push.
Step 604: The RI returns to the service system an authorization response message associating the digital contents, in which the message carries the result of sending the RO.

Before using the digital contents, the terminal device obtains the rights expression for controlling the use of digital contents and performs authentication according to the rights expression. When the rights expression is embedded into the RO, the terminal device may retrieve the corresponding RO according to the association relation between the digital content and the RO, extract the corresponding rights expression from the RO, and execute the rights expression. The terminal device transfers the value of the rights consumption state to the corresponding parameter variable in the rights expression, executes the rights expression according to the definitions of syntax and semantics of the rights expression to obtain the remaining consumption state information of the rights, and uses the digital contents according to the remaining consumption state information.

When the terminal device transfers the value of the rights consumption state to the corresponding parameter variable in the rights expression, the terminal device may transfer the current time (cur-datetime, current secure DRM time of the system) of the rights, time of use start (start-used-time, time of using the content successfully for the first time), consumed count of using the content (used-count, count of using the content already consumed by the user), and consumed duration (used-accumulated, accumulated duration of consuming the service). Here, the value of the rights consumption state may also be a ServiceID (the composite media or album may use the same service ID), Version (version of rights description language), CreateDate (date when an RO is created), and DuplicateProcMode (processing mode applied if the terminal involves repeated ROID. The values of DuplicateProcMode include: Abandon, Overwrite, Ignore).

The remaining consumption state information of the rights obtained by executing the rights expression may include:
authentication result (auth-result): "auth-result = 1" indicates that the user passes the authentication successfully and can consume the service; "auth-result = 0" indicates the user fails the authentication and cannot consume the service currently, but the rights are valid; "auth-result = -1" indicates that the authentication fails and the rights are invalid;
authentication period (auth-period): "auth-period = 0" indicates that no periodical authentication is required; "auth-period > 0" indicates the time interval of periodical authentication;
counting/delay: "delay = 0" indicates that no delay needs to be considered; "delay > 0" indicates that the counting starts or the time interval of the accumulated duration counts;
remaining count: "count = -1" indicates that no remaining count needs to be considered; "count >= 0" indicates the remaining count in this authentication period;
remaining accumulated count: "accumulated = -1" indicates that no remaining accumulated duration needs to be considered; "count >= 0" indicates the remaining accumulated duration in this authentication period; and
validity period (datetime): "datetime = -1" indicates that no datetime needs to be considered; "datetime >= 0" indicates the relative start time and end time of this authentication period.

For example, if "auth-period = 0 second", "authentication returning delay = 10 seconds", and "count = 20", it indicates that the current remaining count is 20 attempts of using the service, the use of the service for more than 10 seconds counts as one attempt of consumption, and no periodical authentication is required. If "auth-period = 60 seconds", "authentication returning delay = 10 seconds", and "accumulated = 1.5 hours", it indicates that the current remaining count is 1.5 hours of accumulated duration, the accumulated use time starts after the service use continues for 10 seconds, and authentication is performed every 60 seconds.

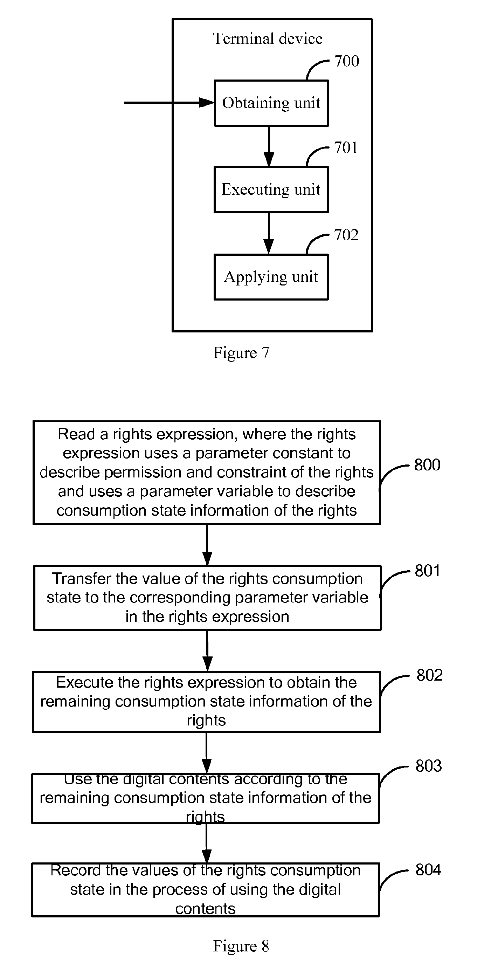

As shown in Figure 7, a terminal device in an embodiment of the present invention includes: an obtaining unit 700, adapted to obtain a rights expression for controlling the use of digital contents, a parameter constant is used to describe the permission and constraint of the rights and a parameter variable is used to describe the consumption state information of the rights in the rights expression; an executing unit 701, adapted to transfer the value of the rights consumption state to the corresponding parameter variable in the rights expression, and execute the rights expression to obtain the remaining consumption state information of the rights; and an applying unit 702, adapted to use the digital contents according to the remaining consumption state information of the rights. The executing unit 701 may perform authentication, and the applying unit 702 may perform rights control operations, without caring about the specific rights. In this case, in order to ensure authentication accuracy and rights independence, the applying unit 702 records the all values of the consumption states, so that the executing unit 701 can transfer the value of the consumption state to the corresponding parameter variable in the rights expression in each authentication operation conveniently.

As shown in Figure 8, the process of executing the rights expression and using the digital contents by the terminal device according to the execution result includes the following steps:
Step 800: The terminal device reads the rights expression for controlling the use of digital contents, where the rights expression uses a parameter constant to describe the permission and constraint of the rights and uses a parameter variable to describe the consumption state information of the rights.
Step 801: The terminal device transfers the value of the rights consumption state to the corresponding parameter variable in the rights expression.
Step 802: The terminal device interprets and executes the rights expression to obtain the remaining consumption state information of the rights.
Step 803: The terminal device uses the digital contents according to the remaining consumption state information of the rights.
Step 804: The terminal device records the values of the rights consumption state in the process of using the digital contents.

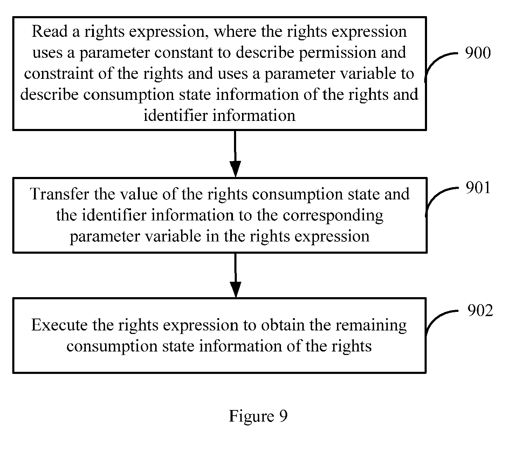

Another scenario may be: the rights expression generated by the server may describe multiple rights. In this case, the generating unit in the server may use a parameter variable to describe the corresponding identifier information of each version in the rights expression; the executing unit in the terminal device may transfer the identifier of a right in the received rights expression to the corresponding parameter variable in the rights expression after receiving the rights expression, and execute the rights expression to obtain the remaining consumption information of the rights associating the identifier. As shown in Figure 9, the process of executing the rights expression by the terminal device to obtain the remaining consumption state information of one of the rights includes the following steps:
Step 900: The terminal device reads the rights expression for controlling the use of digital contents, wherein the rights expression describes multiple rights, uses a parameter constant to describe the permission and constraint of the rights and uses a parameter variable to describe the consumption state information and identifier information of the rights.
Step 901: The terminal device transfers the value of the rights consumption state and the rights identifier to the corresponding parameter variable in the rights expression.
Step 902: The terminal device interprets and executes the rights expression to obtain the remaining consumption state information of the rights associating the identifier.
The rights expression uses a parameter constant to describe the permission and constraint of the rights and uses a parameter variable to describe the consumption state information of the rights, and carries the description information of the rights. Therefore, it is not necessary for the terminal device and the server to negotiate the rights beforehand. The rights description language can be extended without upgrading the terminal device, and the logic relation between different rights items can be set flexibly. Moreover, the system is backward compatible and can be upgraded by the operator in a unified way. Even if the terminal is unable to support all attributes after upgrade, the system can still use the rights existent before upgrade.

In view of the security performance, the rights expression may be signed to prevent falsification. The time used in the rights authentication process may be the security time; the authentication execution operation may be performed by the SIM card, namely, the SIM card executes the rights expression. In this case, the executing unit in the terminal device is a SIM card. Therefore, the processing is more secure, and the algorithm may be upgraded by only upgrading the SIM card so that the algorithm upgrade is more flexible without degrading security.

The rights expression may also carry description information for describing rights in texts, other descriptive information, and rights-related information provided for the consumer. Preferably, the rights description information is extended in the authentication execution result, associates the rights uniquely, and is signed together with the rights expression to prevent falsification. This prevents the content provider or the service provider from deceiving consumers by reducing rights in the process of transmitting the RO. For example, a "digest" field is added in the rights rule, and is expressed in hexadecimal (for example, digest = "ABCDEFGH") to indicate signature of the message. The signature solution comes in many types, and is determined by the operator. The signature is appropriate only if it ensures consistency of the algorithm between the terminal and the service side. The signature algorithm may be MD5 or RSA, a summary of the message or a summary algorithm with signature keys of both parties. The specific implementation mode is: The generating unit in the server may use the rights expression to carry rights description information, the applying unit in the terminal device may provide the description information for the user to judge whether the permission and constraint of rights in the rights expression are consistent with the permission and constraint in the system configuration or subscribed rights.

An RO being transmitted may be bound to the user. The rights rule may be extended flexibly, for example, a "userlist" field may be added: userlist = 13813812345; action = play;...; and the parameter variable sent during user authentication also includes "userid". In this case, the corresponding tributary needs to be added in the authentication scripts to check whether "userlis" is consistent with "userid". If a "userlists" field is added: userlist = 13813812345, 13913912345,...; action = play; ...; and the parameter variable sent during user authentication also includes "userid", the corresponding tributary should be added in the authentication scripts to check whether "userid" exists in the "userlist". Here, the parameter name and the format can be defined by the user, and the operation process is similar to the operation process described above.

In order to prevent the RO from being cracked, a public and private key system may be applied for the terminal device on the basis of binding the user. Each terminal device associates a pair of public and private keys. The server reserves the public key to encrypt a message, and the terminal device adopts the private key to decrypt the message. When the message is received by another terminal device halfway, the terminal device is unable to decrypt the message for lack of the corresponding key. Nevertheless, the symmetric algorithms such as DES and 3DES may also be applied here, and the principles are the same. Besides, the smart card technology may be integrated into the SIM card to encrypt the saved private key, thus further improving the security performance. Moreover, all users may use the same key, or several users are included into one group (the grouping policy comes in several types, for example, grouping based on the mobile number, home area of the user, or serial number of the user terminal) and share a group of keys or a pair of keys.

Furthermore, an RO being transmitted may also be bound to contents. The content ID applied by the corresponding rights rule may be defined in the process of defining the rights rule, for example, a "contentID" is added: contentID= http://www.huawei.com/info.mpg ;action = play;...; the parameter variable sent during the user authentication also includes a contentID, and the corresponding tributary needs to be added in the authentication scripts to check whether the contentID exists in the contentID; or the unified rights may associate multiple content IDs, for example, a "contentIDs" field is added to list more than one contentID: contentID= http://www.huawei.com/info.mpg, http://www.huawei.com/info2.mpg; action = play;...

When multiple ROs exist, the terminal device may select the sequence of executing the rights expressions in multiple ROs, for example, executing the rights expressions in a sequence of creation dates, namely, the early created one is executed first, or in a sequence of the version of the RO, or in a reverse sequence of creation dates.

Ordinary technical personnel in this field may understand that all or part of the steps in the preceding embodiments can be completed through a program which instructs related hardware. The program may be stored in a PC-readable storage medium, for example, ROM/RAM, disk and CD.

In embodiments of the present invention, the server provides a terminal device with the generated rights expression which controls the use of digital contents, where the rights expression uses a parameter constant to describe the permission and constraint of the rights and uses a parameter variable to describe the consumption state information of the rights; after receiving the rights expression, the terminal device needs only to transfer the value of the consumption state to the corresponding parameter variable in the rights expression, execute the rights expression according to the syntax definition of the rights expression to obtain the remaining consumption state information of the rights, and use the digital contents according to the remaining consumption state information of the rights. In this process, it is not necessary for the terminal device and the server to negotiate the format of the rights description file and supported rights types or meanings of the rights items beforehand, thus making the rights description language flexibly extensible. The rights expression uses a parameter constant to describe the permission and constraint of the rights and uses a parameter variable to describe the consumption state information of the rights. Therefore, the present invention makes it convenient to set the logic relations between different rights items flexibly, and avoids the inconvenience in upgrading the server and the terminal caused by definite and fixed definitions of elements of all modes in the prior art. Moreover, the input/output parameters of the terminal device are durable once determined, without being affected by the specific rights. The extension of rights does not change the input/output parameters, thus keeping the terminal stable.

Furthermore, the authentication execution operation is performed by a SIM card, which makes the processing more secure. The algorithm may be upgraded by only upgrading the SIM card, so that the algorithm upgrade is more flexible without degrading security. Moreover, the system is backward compatible, and can be upgraded by the operator in a unified way. Even if the terminal is unable to support all attributes after upgrade, the system can still use the rights existent before upgrade.

Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for providing rights description, comprising:
generating a rights expression for controlling the use of digital contents, wherein a parameter constant is used to describe permission and constraint of the rights and a parameter variable is used to describe consumption state information of the rights in rights expression; and
providing a terminal device with the rights expression.

2. The method of claim 1, wherein, the rights expression describes multiple rights, a parameter variable is used to describe an identifier information of each rights in the rights expression.

3. The method of claim 1, wherein, the rights expression carries rights description information according to the rights uniquely, wherein the rights description information is provided for the user to judge whether the permission and constraint of rights in the rights expression are consistent with the permission and constraint in the system configuration or subscribed rights.

4. The method of claim 1, claim 2 or claim 3, wherein, the rights expression is provided for the terminal device directly, or the rights expression is embedded into an Right Object (RO) and then is provided for the terminal device.

5. A method for using a rights description, comprising:
obtaining a rights expression for controlling the use of digital contents, wherein a parameter constant is used to describe permission and constraint of the rights and a parameter variable is used to describe consumption state information of the rights in the rights expression;
transferring a value of the rights consumption state recorded by a terminal device to the corresponding parameter variable in the rights expression and executing the rights expression to obtain remaining consumption state information of the rights; and
using the digital contents according to the remaining consumption state information of the rights.

6. The method of claim 5, wherein, receiving the rights expression directly; or
receiving an Right Object (RO) with an embedded rights expression and extracting the rights expression from the RO.

7. The method of claim 5, wherein, the rights expression is used to described multiple rights, and a parameter variable is used to describe an identifier information of each right, the identifiers of the rights are transferred to the corresponding parameter variable in the rights expression, and the rights expression is executed to obtain remaining consumption state information of the rights corresponding to the identifier.

8. The method of claim 5, wherein, the rights expression carries rights description information which associates the rights uniquely, the description information is provided for the user to judge whether the permission and constraint of rights in the rights expression are consistent with the permission and constraint in the system configuration or subscribed rights.

9. The method of claim 5, wherein executing the rights expression by a SIM card.

10. The method of any of claim 5 to claim 9, wherein, the values of the rights consumption state comprise at least one of:
the current time of rights, time of starting using rights, consumed count of using rights, service identifier of consumed duration, description language version, creation date, and mode of processing duplicate rights identifiers existent on the terminal device.

11. The method of any of claim 5 to claim 9, wherein the remaining consumption state information of the rights comprises at least one of: the authentication result, authentication period, delay, remaining count, remaining accumulated duration, and validity period.

12. A server, comprising:
a receiving unit, adapted to receive permission and constraint of rights for controlling use of digital contents, and consumption state information;
a generating unit, adapted to generate a rights expression for controlling the use of digital contents, wherein a parameter constant is used to describe permission and constraint of the rights and a parameter variable is used to describe consumption state information of the rights in the rights expression; and
a sending unit, adapted to provide a terminal device with the rights expression.

13. The server of claim 12, wherein, the rights expression describes multiple rights, the generating unit adapted to use the parameter variable to describe identifier information of each right in the rights expression.

14. The server of claim 12, wherein, the generating unit adapted to generate a rights expression, the rights expression carries rights description information which associates the rights uniquely and the terminal device provides the obtained description information for the user to judge whether the permission and constraint of rights in the rights expression are consistent with the permission and constraint in the system configuration or subscribed rights.

15. A terminal device, comprising:
an obtaining unit, adapted to obtain a rights expression for controlling the use of digital contents, wherein a parameter constant is used to describe permission and constraint of the rights and a parameter variable is used to describe consumption state information of the rights in the rights expression;
an executing unit, adapted to transfer a value of the recorded rights consumption state to the corresponding parameter variable in the rights expression and execute the rights expression to obtain remaining consumption state information of the rights; and
an applying unit, adapted to use the digital contents according to the remaining consumption state information of the rights.

16. The terminal device of claim 15, wherein, the rights expression is used to described multiple rights, a parameter variable is used to describe identifier information of each right in the rights expression and the executing unit adapted to transfer the identifier of the rights to the corresponding parameter variable in the rights expression and execute the rights expression to obtain the remaining consumption state information of the rights corresponding to the identifier.

17. The terminal device of claim 15, wherein, rights description information associates the rights uniquely is carried in the rights expression , and the applying unit adapted to provide the description information for the user to judge whether the permission and constraint of rights in the rights expression are consistent with the permission and constraint in the system configuration or subscribed rights.

18. The terminal device of claims 15, 16 or 17, wherein the executing unit is a SIM card.

19. A Digital Rights Management, DRM system, comprising:
a server, adapted to generate a rights expression for controlling the use of digital contents, wherein a parameter constant is used to describe permission and constraint of the rights and a parameter variable is used to describe consumption state information of the rights in the rights expression, and provide a terminal device with the rights expression; and
the terminal device, adapted to obtain the rights expression from the server, transfer the recorded value of the rights consumption state to the corresponding parameter variable in the rights expression, execute the rights expression to obtain the remaining consumption state information of the rights, and use the digital contents according to the remaining consumption state information of the rights.

20. The system of claim 19, wherein, the rights expression is used to described multiple rights, a parameter variable is used to describe the identifier information of each right in the rights expression, and the terminal device transfers the identifiers of the rights to the corresponding parameter variable in the rights expression and executes the rights expression to obtain the remaining consumption state information of the rights associating the identifier.

21. The system of claim 19, wherein the server uses the rights expression to carry the rights description information which associates the rights uniquely, and the terminal device provides the description information for the user to judge whether the permission and constraint of rights in the rights expression are consistent with the permission and constraint in the system configuration or subscribed rights.

22. The system of claim 19, wherein the server is further adapted to embed the generated rights expression into an RO and then send it to the terminal device, further comprising:
a service system, adapted to provide the terminal device with digital contents and request the server to send the RO to the terminal device.
